# DEMANDE DE BREVET EUROPEEN

(11) **EP 3 095 927 A1**
(43) Date de publication de la demande: **23.11.2016**
(21) Numéro de dépôt: 16170419.2
(22) Date de dépôt: 19.05.2016
(51) Int. Cl.: E04F 15/10, B32B 5/26, B32B 5/30, B32B 27/12

(54) **DALLE POUR LA REALISATION D'UN REVETEMENT DE SOL A PERFORMANCE DE REDUCTION DES BRUITS SOLIDIENS**

(30) Priorité: 22.05.2015 FR 1554613
(71) Demandeur: GERFLOR, 69100 Villeurbanne (FR)
(72) Inventeur: COUSIN, Pascal, 26000 VALENCE (FR); CEYSSON, Olivier, 84500 BOLLENE (FR)
(74) Mandataire: Cabinet Laurent & Charras

(57) **Abrégé**

La présente invention concerne un élément (1), telle qu'une dalle ou une lame, pour la réalisation d'un revêtement de sol ou similaire, à performance de réduction de bruits du type solidien, tels que des bruits de roulement, d'impact ou de vibrations générés à des fréquences comprises entre 50 et 1000 Hz.

Selon l'invention, l'élément (1) comprend un empilement de couches solidaires les unes des autres, dont une couche d'usure (2) en matière plastique définissant une couche de surface, au moins une couche support (3) en matière plastique, au moins une couche amortissante (4) présentant un module d'Young compris entre 0,1 et 5 MPa, et au moins deux armatures de renfort (5) séparées l'une de l'autre par au moins l'une desdites couches (3, 4).

## Description

### DOMAINE TECHNIQUE

La présente invention concerne un élément, telle qu'une dalle ou une lame, pour la réalisation d'un revêtement de sol ou similaire, et plus particulièrement un élément possédant des propriétés d'atténuation des bruits du type solidien, c'est-à-dire des bruits transmis par le sol en lien, par exemple, avec des activités commerciales ou industrielles, tels que des vibrations, des bruits de roulement ou d'impact.

L'invention trouve notamment une application avantageuse pour réduire l'intensité et la propagation des bruits du type solidien générés à faibles fréquences, de l'ordre de 50 à 1000 Hertz, et de préférence de l'ordre de 50 à 500 Hertz, à l'inverse des bruits du type aériens, tels que ceux transmis par l'air comme la parole par exemple, générés à des fréquences plus élevées.

Une telle application avantageuse réside dans la réalisation de revêtements de sols pour surfaces commerciales ou industrielles situées en pieds d'immeubles résidentiels.

### ART ANTERIEUR

Pour réaliser un revêtement de sol présentant des propriétés d'atténuation des bruits du type solidien, il est connu de réaliser des chapes en pose flottante sur des matériaux d'isolation acoustique. En d'autres termes, il s'agit d'intercaler une couche intermédiaire souple d'isolation acoustique, telle qu'une couche de polystyrène ou autre matériau approprié, entre le sol ou la structure porteuse et la chape, afin d'éviter la transmission des vibrations générées sur la chape vers le sol ou la structure porteuse.

Cette solution permet de réaliser un revêtement de sol présentant des propriétés d'atténuation des bruits du type solidien mais présente des inconvénients inhérents à sa structure, notamment au niveau de la pose qui n'est pas libre et qui est relativement longue et coûteuse puisqu'elle nécessite plusieurs étapes distinctes.

Il existe également des revêtements de sol constitués de dalles à base de caoutchouc ou de polyuréthane qui permettent notamment d'absorber des vibrations de sorte à présenter des propriétés d'atténuation des bruits du type solidien.

Cependant, l'inconvénient de ces dalles réside dans leur mode de pose au sol qui n'est pas libre, car elles doivent généralement être collées, mais également dans le fait que celles-ci ne sont généralement pas adaptées aux activités commerciales ou industrielles nécessitant une très bonne résistance à l'usure étant donné le trafic généralement intense qu'elles doivent supporter.

Il existe enfin des solutions qui combinent d'une part, la pose d'une sous-couche en matériau souple et amortissant pour atténuer des bruits du type solidien et, d'autre part, la pose libre d'un revêtement de sol présentant de bonnes capacités de résistance à l'usure pour s'adapter aux activités commerciales et industrielles.

Cependant, l'inconvénient de cette solution réside dans le fait que la pose doit s'effectuer en deux fois, augmentant de fait le coût relatif à la main d'oeuvre, et nécessite la fabrication, la manutention et le transport de deux éléments de revêtement distincts.

### EXPOSE DE L'INVENTION

L'un des buts de l'invention est donc de remédier à ces inconvénients en proposant un élément, telle qu'une dalle ou une lame, pour la réalisation d'un revêtement de sol ou similaire, possédant des propriétés d'atténuation des bruits du type solidien, c'est-à-dire des bruits transmis par le sol, tels que des vibrations, des bruits de roulement ou d'impact, tout en présentant une structure lui permettant de résister à l'usure relative à la marche ou au passage, et au poinçonnement.

Un autre objectif de l'invention est de fournir un tel élément permettant une installation rapide, aisée et utilisable sans délai, et qui soit amovible.

Un autre objectif de l'invention est de fournir un élément pour la réalisation d'un revêtement de sol qui soit bien plan, sans décalage de niveau, afin d'éviter de générer des bruits d'à-coups lors du passage de dispositifs à roues sur celui-ci, tels que des charriots ou des caddies par exemple.

Pour résoudre les problèmes précités, il a été mis au point un élément, telle qu'une dalle ou une lame, pour la réalisation d'un revêtement de sol ou similaire, à performance de réduction des bruits du type solidien, tels que des bruits de roulement, d'impact, ou de vibrations générés à des fréquences comprises entre 50 et 1000 Hz.

Conformément à l'invention, l'élément comprend un empilement de couches solidaires les unes des autres, dont au moins, une couche d'usure en matière plastique définissant une couche de surface, revêtue de préférence d'un vernis de protection, au moins une couche support en matière plastique, au moins une couche amortissante présentant un module d'Young compris entre 0,1 et 5 MPa, et au moins deux armatures de renfort séparées l'une de l'autre par au moins l'une desdites couches.

L'association d'un élément pour la réalisation d'un revêtement de sol avec deux armatures de renfort et une couche amortissante présentant un module d'Young compris entre 0,1 et 5 MPa permet d'améliorer significativement l'atténuation des bruits de roulement, d'impact ou de vibrations en diminuant l'amplitude desdites vibrations, tout en bénéficiant d'une capacité de résistance au poinçonnement en limitant la déformation mécanique verticale et l'étirement transversal de l'élément.

Selon des formes de réalisation différentes, il est possible d'avoir une pluralité de configurations possibles pour le positionnement des armatures de renfort. En effet, celles-ci peuvent être agencées de part et d'autre d'une couche support ou d'une couche amortissante. Il est également possible d'avoir une armature de renfort agencée directement sous la couche d'usure, et une couche de renfort agencée directement sur la face supérieure de la couche destinée à être en contact avec le sol, avec notamment deux couches agencées entre lesdites deux armatures de renfort.

De la même manière, la ou les couches amortissantes sont agencées sous et/ou sur la couche support. Ainsi, la couche amortissante peut être directement agencée sous la couche d'usure et de surface pour diminuer l'amplitude des vibrations générées par la source, ou directement agencée en contact avec le sol pour rompre le chemin de transmission des vibrations vers le sol.

D'une manière avantageuse, l'élément de revêtement de sol selon l'invention peut comprendre deux couches amortissantes, une première agencée sous la couche d'usure, et une deuxième agencée en contact avec le sol.

Une pluralité de configurations différentes sont possibles sans sortir du cadre de l'invention en fonction du positionnement des armatures de renfort et de la ou des couches amortissantes.

Selon des formes de réalisation préférées l'une des armatures de renfort, ou les deux, se présente sous la forme d'une grille de verre comprenant des fils de trames et des fils de chaines espacés les uns des autres de 3 mm selon les dimensions longitudinale et transversale, et comprenant une masse linéique comprise entre 50 à 400 g/km (Tex), et de préférence de l'ordre de 270 g/km (Tex).

De préférence, la couche amortissante est réalisée en matière plastique et comprend entre 10 et 35% en poids de particules de matériau résilient, comprenant, par exemple, des dimensions comprises entre 0.5 et 2 mm.

Selon une forme de réalisation avantageuse, notamment pour des questions de recyclabilité, les particules de matériau résilient sont des granulés de liège, comprenant, de préférence, une densité comprise entre 30 et 70 kg/m³.

### DESCRIPTION SOMMAIRE DES FIGURES

D'autres avantages et caractéristiques ressortiront mieux de la description qui va suivre, donnée à titre d'exemple non limitatif, de l'élément conforme à l'invention pour la réalisation d'un revêtement de sol à performance de réduction des bruits du type solidien, en référence aux dessins annexés sur lesquels :
- la figure 1 est une représentation schématique illustrant, en coupe transversale, un premier mode de réalisation préféré de l'élément selon l'invention ;
- la figure 2 est une vue similaire à celle de la figure 1, illustrant un deuxième mode de réalisation préféré de l'élément selon l'invention ;
- la figure 3 est une vue similaire à celle de la figure 1, illustrant un troisième mode de réalisation préféré de l'élément selon l'invention ;
- la figure 4 est une vue similaire à celle de la figure 1, illustrant un quatrième mode de réalisation préféré de l'élément selon l'invention.

### DESCRIPTION DETAILLEE DE L'INVENTION

L'invention concerne un élément (1) pour la réalisation d'un revêtement de sol, telle qu'une dalle ou une lame, possédant des propriétés d'atténuation des bruits du type solidien, c'est-à-dire des bruits transmis par le sol en lien, par exemple, avec des activités commerciales ou industrielles, tels que des vibrations, des bruits de roulement ou d'impact, générés à faibles fréquences, de l'ordre de 50 à 1000 Hertz, et de préférence de l'ordre de 50 à 500 Hertz.

L'élément (1) est, par exemple, de forme carrée et est réalisé selon une structure multi-couches, lesquelles couches sont reliées entre elles et rendues solidaires par tous moyens de liaison appropriés, tel que par collage ou pressage à chaud par exemple.

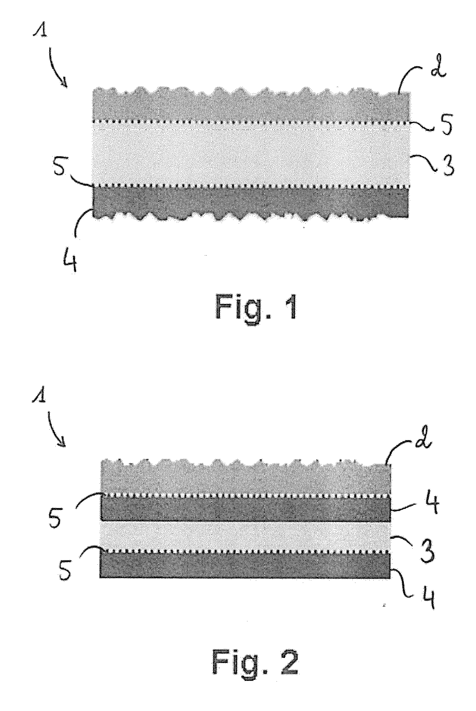

En référence aux figures 1 à 4 illustrant, en coupe transversale, des exemples de réalisation de l'élément (1) selon l'invention, celui-ci comprend une couche d'usure (2) en matière plastique tel qu'en polychlorure de vinyle. Cette première couche d'usure (2) forme une couche de surface et de décor de l'élément (1) selon l'invention, et présente une résistance et une dureté élevées, par exemple une dureté shore A de l'ordre de 90, propices au classement P4 concernant notamment la résistance aux actions mécaniques des engins lourds roulants (poinçonnement et roulage), et les chutes d'objets lourds (impact) de la norme française UPEC. Pour obtenir cette dureté, la couche d'usure (2) comprend par exemple une densité comprise entre 1100 et 1700 kg/m³. La couche d'usure (2) permet à l'élément (1) de résister au fort trafic généralement présent dans les zones commerciales ou industrielles. Celle-ci est avantageusement revêtue d'un vernis de protection, par exemple, à base de polyuréthane photoréticulé. Ce vernis de protection permet notamment d'améliorer la résistance au trafic, facilite le nettoyage et l'entretien en améliorant particulièrement la résistance à la tache de la couche d'usure (2). Pour obtenir de bonnes résistances au trafic et au poinçonnement, l'épaisseur de couche d'usure (2) est comprise, par exemple, entre 0.5 et 2 mm.

De préférence, la couche d'usure (2) est grainée en surface pour améliorer l'esthétique, mais également pour participer à la résistance à la glissance et au poinçonnement dynamique de l'élément (1).

Par ailleurs, et conformément à l'invention, l'élément (1) comprend ensuite au moins une couche support (3), au moins une couche amortissante (4), et au moins deux armatures de renfort (5) séparées l'une de l'autre par au moins l'une desdites couches (3, 4).

Les armatures de renfort (5) permettent d'améliorer la résistance à la déformation mécanique verticale de l'élément (1) en renforçant la résistance à l'écrasement et en renforçant le comportement élastique dudit élément (1) selon des composantes horizontales.

Les armatures de renfort (5) se présentent par exemple sous la forme de grilles ou de voiles de verre ou bien d'armatures en textile non tissé. Lesdites armatures de renfort (5) peuvent être identiques ou différentes l'une de l'autre. Une forme de réalisation préférée consiste en des grilles de verre comprenant des fils de trames et des fils de chaines espacés les uns des autres de 3 mm selon les dimensions longitudinale et transversale, et comprenant une masse linéique comprise entre 50 et 400 g/km (Tex), et est de préférence de l'ordre de 270 g/km (Tex). Le poids d'une grille de verre est, par exemple, compris entre 50 et 200 g/m², et est de préférence de l'ordre de 180g/m², avec une résistance mécanique comprise entre 10 et 100 daN/cm, et de préférence de l'ordre de 60 daN/cm. L'épaisseur des armatures de renfort se situe avantageusement entre 200 et 500 µm, et de préférence est égale à 370 µm.

Selon des formes de réalisation possibles, les armatures de renfort (5) sont agencées de part et d'autre d'une couche support (3) ou d'une couche amortissante (4). Il est également possible d'avoir une armature de renfort (5) agencée directement sous la couche d'usure (2), et une couche de renfort (5) agencée directement sur la face supérieure de la couche destinée à être en contact avec le sol, avec notamment deux couches agencées entre lesdites deux armatures de renfort.

La couche support (3) est en matière plastique, tel qu'en polychlorure de vinyle et permet de former le corps de l'élément (1). Afin de permettre une bonne résistance au poinçonnement, la couche support (3) présente un module d'Young élevé, par exemple compris entre 500 et 1000 MPa, et est de préférence de l'ordre de 760 MPa pour être propice au classement P4 de la norme française UPEC. L'épaisseur de la couche support (3) est comprise entre 1 et 3 mm, et est de préférence de 2 mm afin de permettre une manipulation aisée de l'élément (1) et de participer à la résistance au trafic et au poinçonnement.

La couche amortissante (4) présente, quant à elle, un module d'Young relativement faible, compris entre 0,1 et 5 MPa, et de préférence égal à 3 MPa. La couche amortissante (4) permet de réduire l'intensité et la propagation des bruits du type solidien. La couche amortissante (4) comprend par exemple une dureté Shore A comprise entre 30 et 80, et de préférence égale à 55 pour être propice au classement P4. De préférence, ladite couche amortissante (4) est réalisée en matière plastique et comprend, par exemple, entre 10 et 35% en poids de particules de matériau résilient, tel que du caoutchouc, du polyuréthane, ou de préférence des granulés de liège pour permettre le recyclage dudit élément (1). De préférence, la couche amortissante (4) comprend entre 15 et 20% en poids de particules de matériau résilient. La couche amortissante (4) comprend, par exemple, du polychlorure de vinyle, du plastifiant du type Phtalate par exemple, des charges telle que de la craie, et des granulés de liège.

Les particules de matériau résilient comprennent des dimensions comprises entre 0.5 et 2 mm. De préférence, dans une même couche amortissante (4), les particules de matériau résilient comprennent, soit des dimensions comprises entre 0.5 et 1 mm, soit des dimensions comprises entre 1 et 2 mm. La densité des granulés de liège est avantageusement comprise entre 30 et 70 kg/m³, et de préférence comprise entre 40 et 60 kg/m³.

Cette couche amortissante (4) est agencée, soit directement sous la couche d'usure (2) pour diminuer l'amplitude des vibrations générées par la source de bruit, soit directement en contact avec le sol pour atténuer ou rompre la transmission des vibrations au sol.

L'épaisseur de la couche amortissante (4) est comprise entre 1 et 3 mm, et est de préférence de 2 mm pour obtenir de bonnes propriétés d'atténuation des bruits solidiens.

Bien entendu, d'une manière avantageuse et en référence aux figures 2 à 4, l'élément (1) peut comprendre deux couches amortissantes (4), une première agencée directement sous la couche d'usure (2) et une deuxième agencée en contact avec le sol. Les couches amortissante (4) peuvent être identiques ou différentes l'une de l'autre aussi bien en termes d'épaisseurs que de compositions, et donc de propriétés amortissantes différentes.

De ce qui précède, l'invention fournit un élément (1) pour la réalisation d'un revêtement de sol, nécessitant qu'une seule étape de pose, alliant résistance au poinçonnement et atténuation des bruits du type solidien générés à des fréquences comprises entre 50 et 1000 Hz.

L'élément (1) selon l'invention peut être composé de différentes manières en fonction de la position de la ou des couches amortissantes (4), ou des armatures de renfort (5), et en fonction de la nature et de l'intensité des bruits du type solidien à atténuer. L'Homme du Métier sera bien entendu libre de dimensionner et positionner les couches nécessaires en fonction de l'environnement sonore correspondant.

A titre d'exemple, les formes de réalisation illustrées ci-après permettent des atténuations en basses fréquences de -3 à -5 dB pour des bruits du type solidien générés à une fréquence égale à 125Hz, de -8 à -10dB à 250Hz, et de -15dB à 500Hz, et en fonction des épaisseurs de la couche amortissante (4).

Selon un premier exemple d'agencement et de configuration des couches de l'élément (1) selon l'invention, illustré à la figure 1, ledit élément (1) comprend successivement une couche d'usure (2), une première armature de renfort (5), une couche support épaisse (3), une deuxième armature de renfort (5), et une couche amortissante (4).

Selon un deuxième exemple illustré à la figure 2, l'élément (1) selon l'invention comprend successivement une couche d'usure (2), une première armature de renfort (5), une première couche amortissante (4), une couche support (3), une deuxième armature de renfort (5), et une deuxième couche amortissante (4).

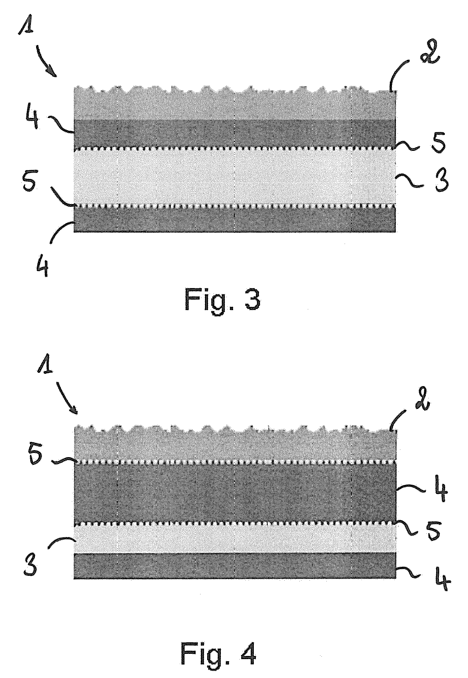

Selon un troisième exemple illustré à la figure 3, l'élément (1) selon l'invention comprend successivement une couche d'usure (2), une première couche amortissante (4), une première armature de renfort (5), une couche support (3), une deuxième armature de renfort (5), et une deuxième couche amortissante (4).

Selon un quatrième exemple illustré à la figure 4, l'élément (1) selon l'invention comprend successivement une couche d'usure (2), une première armature de renfort (5), une première couche amortissante (4), une deuxième armature de renfort (5), une couche support (3), et une deuxième couche amortissante (4).

Dans chacun des exemples illustrés, les armatures de renforts (5) ont été agencées de manière équidistante par rapport à la médiane dudit élément (1), notamment pour renforcer et stabiliser ledit élément (1). Cependant, sans sortir du cadre de l'invention, il est tout à fait envisageable d'utiliser deux armatures de renfort (5) différentes, dont l'une plus épaisse que l'autre par exemple, de sorte que lesdites armatures de renfort (5) ne seront pas agencées de manière équidistante par rapport à la médiane de l'élément (1).

Afin de permettre une pose rapide, amovible, aisée et utilisable sans délai, l'élément (1) selon l'invention présente une forme de carré qui comprend sur les quatre côtés des moyens d'assemblage mâle en saillies (non représentés) en complémentarité d'assemblage avec des moyens d'assemblage femelle (non représentés) définis entre deux moyens d'assemblage mâle. Ces moyens d'assemblage mâle et femelle présentent, par exemple, une forme générale de trapèze et plus particulièrement de queue d'aronde dont les arrêtes sont arrondies. L'emboitement de deux éléments (1) ensemble est facile, et lorsqu'un élément (1) posé est dégradé, le remplacement est aisé. L'élément (1) selon l'invention permet une pose flottante non collée de sorte que la dépose est facile et sans dégradation du support.

L'élément (1) selon l'invention, du fait de la ou des couches amortissantes (4), s'adapte de manière optimale aux défauts du sol sur lequel il est posé de sorte qu'il garde une surface relativement plane. De plus, les éléments (1) d'accouplement en queues d'arondes permettent d'assurer une continuité optimale entre les éléments (1) adjacents et supprime aussi le risque de décalage de niveau évitant les à-coups lors du déplacement de dispositifs à roues sur le revêtement de sol.

Il va de soi que les moyens d'assemblage mâle, et par conséquent les moyens d'assemblage femelle, pourront présenter une forme différente sans pour autant sortir du cadre de l'invention.

De préférence, pour faciliter la pose de l'élément (1) tout en présentant de bonnes propriétés de résistance à l'usure ainsi que de bonnes propriétés d'atténuation des bruits du type solidien, les couches d'usure (2), de support (3) et amortissante (4) comprennent chacune une épaisseur comprise entre 0.5 et 3 mm, et de préférence comprise entre 1 et 2mm. Ainsi, l'élément (1) final comprend une épaisseur généralement comprise entre 5 et 10 mm de sorte qu'il est léger et facile à manipuler et à poser.

Enfin, il est bien évident que les exemples qui viennent d'être donnés ne sont que des illustrations particulières et en aucun cas limitatifs.

## Revendications

1. -Elément (1), telle qu'une dalle ou une lame, pour la réalisation d'un revêtement de sol ou similaire, à performance de réduction de bruits du type solidien, tels que des bruits de roulement, d'impact ou de vibrations générés à des fréquences comprises entre 50 et 1000 Hz, ***caractérisé* en ce qu'**il comprend un empilement de couches solidaires les unes des autres, dont au moins, une couche d'usure (2) en matière plastique définissant une couche de surface, au moins une couche support (3) en matière plastique, au moins une couche amortissante (4) présentant un module d'Young compris entre 0,1 et 5 MPa, et au moins deux armatures de renfort (5) séparées l'une de l'autre par au moins l'une desdites couches (3, 4).

2. Elément (1) selon la revendication 1, ***caractérisé* en ce que** les armatures de renfort (5) sont agencées de part et d'autre d'une couche support (3) ou d'une couche amortissante (4).

3. Elément (1) selon la revendication 1, ***caractérisé* en ce qu'**une armature de renfort (5) est agencée directement sous la couche d'usure (2), et une armature de renfort (5) est agencée directement sur la couche destinée à être en contact avec le sol, avec deux couches agencées entre lesdites deux armatures de renfort (5).

4. Elément (1) selon l'une quelconque des revendications 1 à 3, ***caractérisé* en ce que** la ou les couches amortissantes sont agencées sous et/ou sur la couche support (3).

5. Elément (1) selon l'une quelconque des revendications 1 à 4, ***caractérisé* en ce que** l'une des armatures de renfort (5) se présente sous la forme d'une grille de verre comprenant des fils de trames et des fils de chaines espacés les uns des autres de 3 mm selon les dimensions longitudinale et transversale, et comprenant une masse linéique comprise entre 50 et 400 g/km.

6. Elément (1) selon l'une quelconque des revendications 1 à 5, ***caractérisé* en ce que** la couche amortissante (4) est réalisée en matière plastique et comprend entre 10 et 35% en poids de particules de matériau résilient.

7. Elément (1) selon la revendication 6, ***caractérisé* en ce que** les particules de matériau résilient comprennent des dimensions comprises entre 0.5 et 2 mm.

8. Elément (1) selon l'une quelconque des revendications 6 à 7, ***caractérisé* en ce que** les particules de matériau résilient sont des granulés de liège.

9. Elément (1) selon la revendication 8, ***caractérisé* en ce que** les granulés de liège comprennent une densité comprise entre 30 et 70 kg/m³.

10. Elément (1) selon la revendication 1, ***caractérisé* en ce qu'**il comprend successivement une couche d'usure (2), une première armature de renfort (5), une couche support (3), une deuxième armature de renfort (5), et une couche amortissante (4).

11. Elément (1) selon la revendication 1, ***caractérisé* en ce qu'**il comprend successivement une couche d'usure (2), une première armature de renfort (5), une première couche amortissante (4), une couche support (3), une deuxième armature de renfort (5), et une deuxième couche amortissante (4).

12. Elément (1) selon la revendication 1, ***caractérisé* en ce qu'**il comprend successivement une couche d'usure (2), une première couche amortissante (4), une première armature de renfort (5), une couche support (3), une deuxième armature de renfort (5), et une deuxième couche amortissante (4).

13. Elément (1) selon la revendication 1, ***caractérisé* en ce qu'**il comprend successivement une couche d'usure (2), une première armature de renfort (5), une première couche amortissante (4), une deuxième armature de renfort (5), une couche support (3), et une deuxième couche amortissante (4).
